# EUROPEAN PATENT SPECIFICATION

(11) **EP 1 810 810 B1**
(45) Date of publication and mention of the grant of the patent: **17.08.2011**
(21) Application number: 07000452.8
(22) Date of filing: 10.01.2007
(51) Int. Cl.: B29C 45/14

(54) **Moulding construction and a molding method of a resin-molded product**
Aufbau zum Giessen und Giessverfahren für ein Kunststoffteil
Construction de mouler et procédé pour le moulage d'un produit en résine

(30) Priority: 18.01.2006 JP 2006010433
(43) Date of publication of application: 25.07.2007
(73) Proprietor: Sumitomo Wiring Systems, Ltd., Yokkaichi-city, Mie 510-8503 (JP)
(72) Inventor: Nagashima, Shinyu, Yokkaichi-city, Mie 510-8503 (JP); Maegawa, Akihito, Yokkaichi-city, Mie 510-8503 (JP)
(74) Representative: Müller-Boré & Partner Patentanwälte

(56) References cited:
- EP-A- 1 586 795
- EP-A1- 0 412 893
- DE-A1-102005 032 950
- GB-A- 2 424 613
- JP-A- 9 270 353
- JP-A- 2000 252 038
- JP-A- 2006 032 218
- US-A1- 2004 142 597

## Description

The present invention relates to a molding construction and to a molding method for a resin-molded product formed by insert molding particularly using a primary molded product as an insert.

Document EP 1 586 795 A1 discloses a worm wheel and a method of manufacturing the same. The worm wheel has a metal worm wheel element in which an axial bore is formed at a rotational center and a synthetic resin gear ring attached on the outer circumference of the worm wheel element. Further, a centering guide portion that is coaxial with the axial bore is formed on one surface of the metal worm wheel element. The gear ring is molded on the outer circumference of the worm wheel element.

Document US 2004/0142597 A1 discloses a connector including a terminal fitting having a bent portion and an outer covering configured to cover a part of the terminal fitting, namely the part including the bent portion. The outer covering includes an outer covering body made of resin and a reinforcement member disposed at a position where it restricts a deformation of the terminal fitting caused by an infection pressure acting thereon in molding the outer covering body.

Document JP 2000 252038 A discloses a molded connector obtained by setting a primary molding having terminal parts in a mold and secondarily molding a resin material outside the primary molding. A resin part of the primary molding is projectingly formed with a deformable part, and a secondary molding is performed with the deformable part abutted on the mold.

Document JP 09 270353 A discloses an electric component connection assembling unit comprising a coupler part continuously connected to a terminal retaining part and formed in a mold part by arranging connector terminals in the coupler part.

Document EP 0 412 893 A1 discloses a method for molding an element into a flat body.

Document JP 2006 032218 A discloses a connector for circuit boards having a molded box-shaped casing.

Document DE 10 2005 032 950 A1 discloses a similar connector.

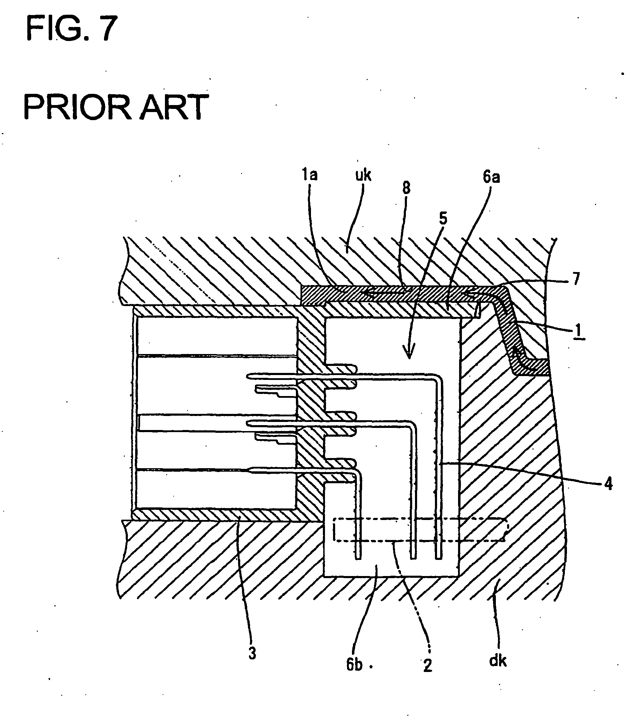

There has been conventionally known an electronic control unit (hereinafter, "ECU") formed by accommodating a printed circuit board having electronic control circuits mounted thereon, various electronic components, and the like in a casing made of synthetic resin (see, for example, Japanese Unexamined Patent Publication No. 2000-159084). As one example, a circuit board connector 3 connected with a circuit board 2 is arranged at a side wall of a box-shaped casing 1 having an open upper surface as shown in FIG. 7, so that an external mating connector can be connected with this connector 3. It should be noted that a state shown in FIG. 7 is a state of molding and is an upside-down of a product.

As means for producing such an ECU, the casing 1 is formed by insert molding using the circuit board connector 3 (primary molded product) as an insert. To this end, a pair of upper and lower molding dies uk, dk openable and closable relative to each other are, for example, equipped, and a bottom wall 6a and left and right walls 6b are formed in the circuit-board connector 3 for surrounding a drawn-out part of terminal fittings 4 together with the molding dies uk, dk lest resin should flow into this part 5.

The circuit board connector 3 is placed in the lower die dk. The rear side and the upper side (lower side in FIG. 7) of the terminal drawn-out part 5 of the circuit-board connector 3 are closed by the lower die dk itself, whereas a recessed surface 7 having a stepped configuration is formed at a highest surface of the lower die dk and the bottom wall 6a of the connector 3 is placed such that the rear end thereof is in close contact with and flush with a corner portion of the recessed surface 7. Upon closing the molding dies, a filling space 8 is defined by holding the upper die uk, and the lower dk including the bottom wall 6a of the connector 3 separated by a specified distance, and molten resin flows into this filling space 8 as shown by arrows in FIG. 7 and solidifies to form a bottom plate portion 1 a of the casing 1.

In the part of the above casing 1 where the bottom plate portion 1a is formed, the rear end of the bottom wall 6a of the connector 3 is closely placed on the corner portion of the recessed surface 7 of the lower die dk and this close-contact portion serves as a so-called cutoff portion. If the cutoff portion is not securely held in close contact, the molten resin having flown into the filling space 8 may intrude into the cutoff portion, and may further leak into the terminal drawn-out part 5 of the connector 3.

The present invention was developed in view of the above problem and an object thereof is to prevent the leakage of resin from a cutoff portion.

This object is solved according to the invention by the features of the independent claims. Preferred embodiments of the invention are subject of the dependent claims.

According to the invention, there is provided a molding construction for a resin-molded product, comprising at least one pair of molding dies openable and closable relative to each other, wherein
at least one recessed surface is formed in a facing surface of a first molding die to have a stepped configuration, at least one insert is placed in the first molding die such that the insert is held substantially in close contact with a corner portion of the recessed surface,
a facing surface of the second molding die substantially faces a side surface of the insert while being spaced apart therefrom, thereby defining a filling space upon closing the molding dies, and molten resin flows along a flowing path into the filling space from a side where the corner portion of the recessed surface is located and solidifies to form a molded product, and
a cross-sectional area of the filling space is gradually reduced along the flowing path of the molten resin into the filling space.

Although the molten resin flows into the filling space with the molding dies closed, the flown-in molten resin generates due to the reduction in cross-sectional area a pressing force and presses the insert (such as a primary molded product) against the recessed surface of the second molding die by a component of this pressing force and thus the insert and the recessed portion are strongly held in close contact. Therefore, the intrusion of the molten resin can be prevented, thereby preventing the leakage of the molten resin from the cutoff portion.

According to a preferred embodiment of the invention, a resin-made primary molded product as the insert is placed in the first molding die and a secondary molded product is molded by flowing resin into the filling space.

Preferably, one side surface and one end surface of the insert are held substantially in close contact with the corner portion of the recessed surface,

Further preferably, the side surface of insert, preferably of the primary molded product, substantially facing the filling space is formed into such an inclined or converging surface as to gradually narrow the width of the filling space along a flowing path of the molten resin.

According to a further preferred embodiment of the invention, there is provided a molding construction for a resin-molded product, comprising a pair of molding dies openable and closable relative to each other, wherein a recessed surface is formed in a facing surface of one molding die to have a stepped configuration, a resin-made primary molded product as an insert is placed in the one molding die such that one side surface and one end surface thereof are held in close contact with a corner portion of the recessed surface, a facing surface of the other molding die faces a side surface of the primary molded product opposite to the side surface held in close contact with the recessed surface while being spaced apart therefrom, thereby defining a filling space upon closing the molding dies, and molten resin flows into the filling space from a side where the corner portion of the recessed surface is located and solidifies to form a secondary molded product, wherein:
the side surface of the primary molded product facing the filling space is formed into such an inclined surface as to gradually narrow the width of the filling space along a flowing direction of the molten resin.

Although the molten resin flows into the filling space with the molding dies closed, the side surface of the primary molded product facing the filling space is formed into an upward inclined surface. Thus, the flown-in molten resin presses this inclined surface and the side surface of the primary molded product opposite to the inclined surface is pressed against the recessed surface of the other molding die by a component of this pressing force and strongly held in close contact. Therefore, the intrusion of the molten resin can be prevented, thereby preventing the leakage of the molten resin from the cutoff portion.

Preferably, the primary molded product is a connector having one or more terminal fittings mounted therein, and the secondary molded product is a casing in which the connector is at least partly embedded.

The present invention is also applicable in the case where a casing is formed by insert molding, using a connector having terminal fitting mounted therein as an insert, and the connector is embedded in the formed casing. Thus, the casing can be formed without causing the leakage of resin.

According to the invention, there is further provided a molding method for molding a resin-molded product, in particular using a molding construction according to the invention or a preferred embodiment thereof, comprising the following steps:
providing at least one pair of molding dies openable and closable relative to each other, wherein
providing at least one recessed surface in a facing surface of a first molding die,
placing at least one insert in the first molding die such that the insert is held substantially in close contact with a corner portion of the recessed surface,
defining a filling space upon closing the molding dies by means of a facing surface of the second molding die arranged to substantially face a side surface of the insert while being spaced apart therefrom,
flowing molten resin along a flowing path into the filling space from a side where the corner portion of the recessed surface is located, thereby generating a pressing force component by means of the flown-in molten resin which presses the insert against the recessed surface of the second molding die, and
solidifying the resin to form a molded product.

According to a preferred embodiment of the invention, the pressing force component is generated by means of a cross-sectional area of the filling space being gradually reduced along the flowing path of the molten resin into the filling space.

Preferably, a resin-made primary molded product as the insert is placed in the first molding die and a secondary molded product is molded by flowing resin into the filling space.

Further preferably, one side surface and one end surface of the insert are held substantially in close contact with the corner portion of the recessed surface,

Most preferably, the side surface of insert, preferably of the primary molded product, substantially facing the filling space is formed into such an inclined or converging surface as to gradually narrow the width of the filling space along a flowing path of the molten resin.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a plan view of an ECU without a lid according to one embodiment of the invention,
FIG. 2 is a section of a connector embedded part of the ECU,
FIG. 3 is a section showing an arranged state of molding dies,
FIG. 4 is a section showing a state where the dies are closed with a connector placed as an insert,
FIG. 5 is a section showing a solidified state of molten resin in filling spaces,
FIG. 6 is a section of the ECU taken out from the molding dies,
FIG. 7 is a section of a prior art.

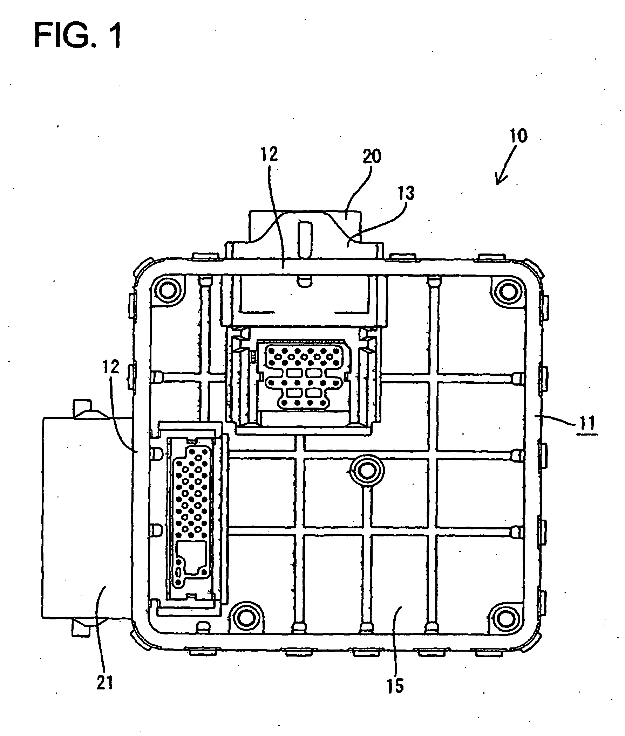

Hereinafter, one preferred embodiment of the present invention is described with reference to FIGS. 1 to 6. In this embodiment, the present invention particularly is applied to an ECU 10 (electronic control unit) to be installed in an automotive vehicle.

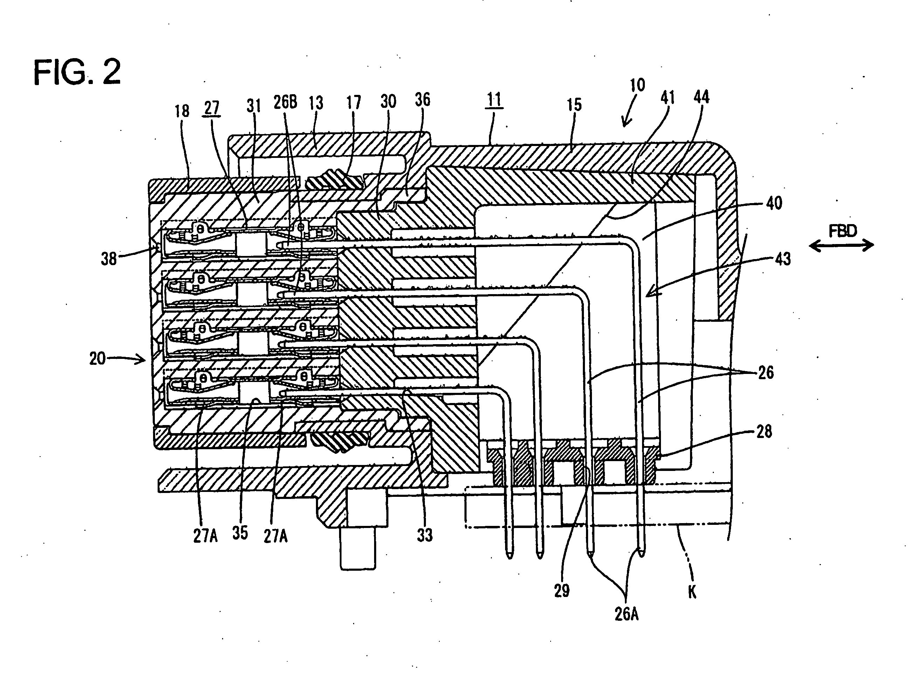

The entire construction of the ECU 10 according to this embodiment is outlined. As shown in FIGS. 1 and 2, the ECU 10 is provided with a (preferably shallow) substantially box-shaped casing 11 made e.g. of synthetic resin having an opening lateral (upper) side, one or more circuit board connectors 20, 21 are provided on one or more side walls, preferably on or at two adjacent side walls 12 of this casing 11, and one or more mating male connectors (not shown) are to be connected with the respective connectors 20, 21 from the outside.

The casing 11 is formed preferably by insert molding using one or more, preferably both circuit board connectors 20, 21 as inserts.

The following description of a molding construction is centered on an embedded part of one circuit board connector 20 (hereinafter, merely "connector 20"). It should be noted that the posture of the ECU 10 shown in FIGS. 2 to 6 is an upside-down of the used one of the ECU 10 as a product.

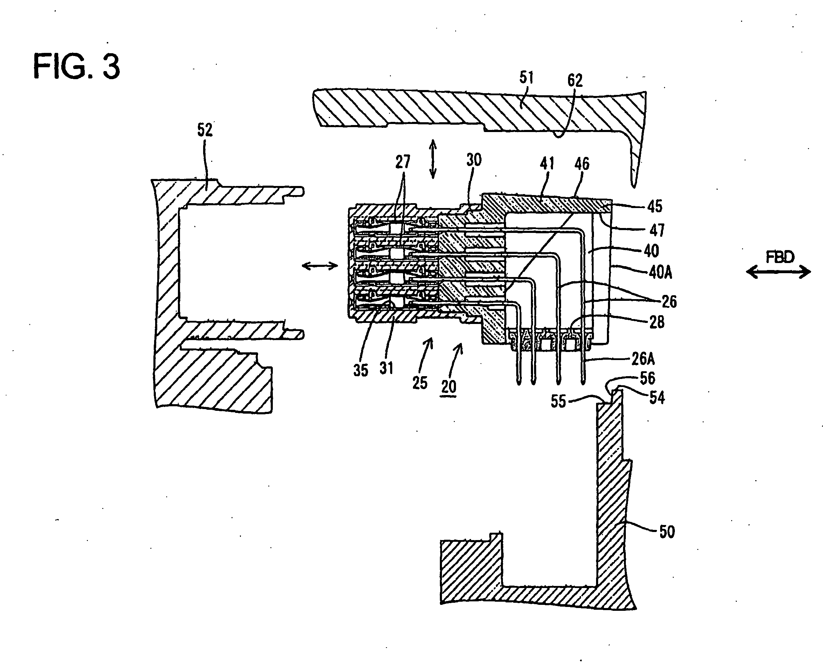

As also shown in FIGS. 2 and 3, the connector 20 is comprised of a housing 25 made e.g. of synthetic resin, one or more terminal fittings 26, 27 held at least partly in or on the housing 25, and preferably an alignment plate 28 likewise made of synthetic resin and mounted in or on the housing 25. The housing 25 includes a main body 30 for at least partly accommodating the one or more board terminals 26, and a holder 31 integral or unitary to the main body 31 and adapted to at least partly accommodate the intermediate terminals 27.

The holder 31 is formed to project out from the side wall 12 of the casing 11, and is at least partly surrounded by a tubular portion 13 as part of the casing 11. A receptacle of the mating male connector is at least partly fittable into a clearance between the holder 31 and the tubular portion 13.

The main body 30 preferably is substantially in the form of a block, and one or more, preferably a plurality of terminal insertion holes 33 into which the one or more respective board terminals 26 are at least partly insertable from an insertion side, preferably substantially from front, penetrate the main body 30 substantially in forward and backward directions FBD. Each board terminal 26 preferably is of a bent type, preferably substantially L-shaped as a whole by bending a narrow and long member at an angle different from 0° or 180°, preferably substantially at right angle at an intermediate position to extend toward an opening (downward in FIG. 3). End portions 26A of the bent parts of the board terminals 26 to extend substantially toward the opening are at least partly inserted through one or more corresponding through holes formed in a device such as in a printed circuit board K (hereinafter, "circuit board K"), junction box, or the like appliance to be connected with conductors or conductor paths on the circuit board K preferably by soldering, welding, press-fitting or the like. On the other hand, end portions 26B of the board terminals 26 at least partly projecting from the front surface of the main body 30 are at least partly insertable into cavities 35 formed in the holder 31.

The holder 31 preferably is similarly substantially in the form of a block, and a fitting tube portion 36 projecting from the outer periphery of or at the rear end surface thereof is at least partly fitted on and coupled to a front end part of the main body 30. In the holder 31, one or more, preferably a plurality of cavities 35 are formed in the substantially same arrangement as the above board terminals 26, the intermediate terminals 27 are at least partly accommodated into the respective cavities 35 from an inserting side, preferably substantially from behind, and one or more insertion holes 38 through which terminals mounted in the mating male connector are at least partly insertable are formed in the front wall.

Each intermediate terminal 27 preferably is formed by coupling at least one pair of female connecting portions 27A one after the other and preferably has a substantially symmetrical shape as a whole with respect to forward and backward directions FBD. Thus, the intermediate terminal fitting 27 can be at least partly accommodated into the cavity 35 from both front and rear sides.

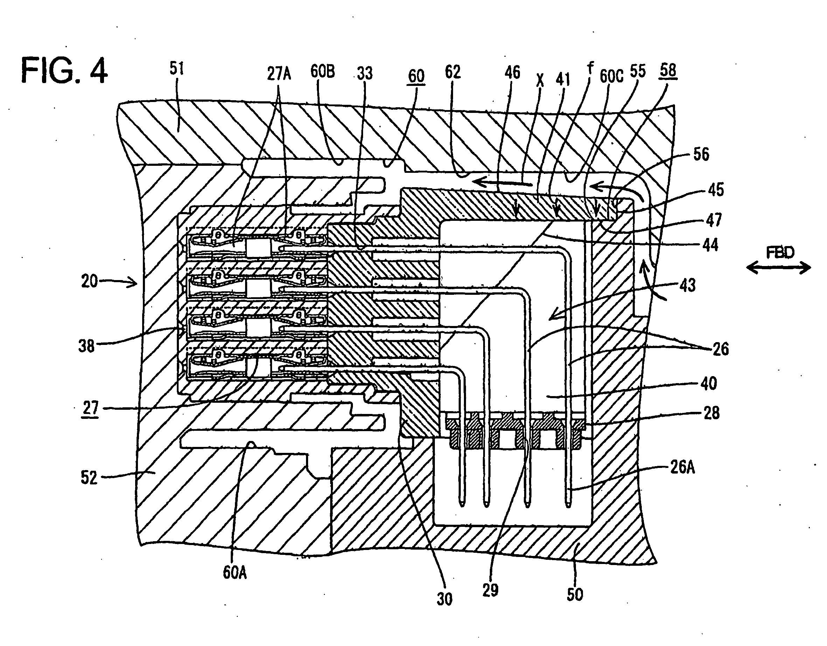

One or more, preferably a pair of side walls 40 at least partly covering the backward projecting parts of the respective board terminals 26 at the (preferably substantially opposite) side(s) extend backward from or near the (preferably substantially opposite) lateral edge(s) of the rear surface of the main body 30. Further, a bottom or base wall 41 at least partly covering the backward projecting parts of the respective board terminals 26 at a side preferably substantially opposite from the opening of the casing 11 extend substantially backward from or near the bottom edge (upper edge in FIG. 4) of the rear surface of the main body 30, and connects the portions (preferably bottom ends) of the substantially opposite side walls 40. In this way, a space defined by the bottom wall 41 and the pair of side walls 40 is defined at the rear side of the main body 30, and this space serves or may serve as a terminal drawn-out part 43 for accommodating the backward projecting parts of the respective board terminals 26.

One or more, preferably a plurality of reinforcing walls 44 for reinforcing the bottom wall 41 are provided at least partly between the bottom wall 41 and the rear surface of the main body 30 in the terminal drawn-out part 43. The respective reinforcing walls 44 preferably are substantially in the form of triangular or converging beams when viewed sideways, are arranged to at least partly partition the respective terminal insertion holes 33 arranged substantially in width direction (or at an angle different from 0° or 180°, preferably substantially normal to the forward and backward directions FBD) and function to align the board terminals 26.

On the other hand, the alignment plate 28 for substantially aligning the board-side end portions 26A of the respective board terminals 26 is mountable at (preferably the opening edges of) the two side walls 40. The alignment plate 28 is formed with one or more positioning holes 29 through which the board-side end portions 26A of the respective one or more board terminals 26 are passed to be positioned.

Rear edges 40A of one or both side walls 40 are formed into inclined or rounded edges gradually inclined or rounded backward toward the upper end of FIG. 3 to facilitate the removal of a molding die as described later, and a rear end surface 45 of the bottom wall 41 substantially in flush with these inclined edges is formed into an inclined or rounded surface substantially continuous with the above rear edges 40A (inclined edges).

An outer surface 46 (upper surface in FIG. 4) of the above bottom or base wall 41 is formed into an inclined or rounded surface with a moderate upward inclination or rounding from the rear edge toward the front edge. The rear edge of the outer surface 46 of the bottom wall 41 preferably is at the substantially same height as a standing surface 56 of a lower die 50. Further, the outer surface 46 is largely recessed at the front edge thereof to be continuous with the outer surface of the main body 30.

The lower die 50 and an upper die 51 substantially opposed to each other and openable and closable (substantially along a vertical direction or a direction at an angle different from 0° or 180°, preferably substantially normal to the forward and backward directions FBD) and a sliding die 52 movable (substantially along a transverse direction or a direction at an angle different from 0° or 180°, preferably substantially normal to the forward and backward directions FBD and/or the opening and closing direction of the lower die 50 and an upper die 51) are prepared as molding dies for secondary molding as shown in FIGS. 3 and 4.

The lower die 50 is roughly shaped such that the connector 20 as an insert can be mounted thereto or at least partly placed therein, and is designed to at least partly receive the main body 30 of the housing 25 and substantially close the rear side and upper side (lower side in FIG. 4) of the terminal drawn-out portion 43 at the rear side of the main body 30 as shown in FIG. 4. A highest or distal surface 54 of the lower die 50 is slightly recessed at the front side to form a recessed surface 55, and an inner surface 47 of the rear end of the bottom wall 41 of the housing 25 and the inclined rear end surface 45 are placed substantially in close contact with the recessed surface 55 and the standing surface 56. This close-contact portion serves as a so-called cutoff portion 58.

The sliding die 52 is arranged before (left side in FIG. 3) of the lower die 50 and can mainly surround the holder 31 from the front side of the main body 30. The sliding die 52 also functions to substantially close the front surfaces of the cavities 35 in the holder 31. Further, a filling space 60A can be formed or defined between the sliding mold 52 and the lower die 50 to form a part of the tubular portion 13 in the casing 11.

The upper die 51 is substantially opposed to the lower die 50 and the sliding die 52 from above and can form or define a filling space 60B mainly between the sliding die 52 and the upper die 51 to form or mold the remaining part of the tubular portion 13 of the casing 11. Further, a filling space 60C can be formed or defined between the upper die 51 and the lower die 50 as well as the bottom wall 41 of the connector 20 as an insert to form or mold a bottom plate portion 15 of the casing 11.

What is to be noted is that the ceiling surface (lower surface 62 of the upper die 51) of the filling space 60C formed between the lower surface 62 of the upper die 51 and the outer surface 46 of the bottom wall 41 of the connector 20 as an insert is a substantially horizontal surface (or substantially parallel to the forward and backward directions FBD), but a bottom surface (outer surface 46 of the bottom wall 41) is an inclined surface with a moderate upward inclination from the rear edge toward the front edge as shown in FIG. 4. In other words, bottom surface (outer surface 46 of the bottom wall 41) and the ceiling surface (lower surface 62 of the upper die 51) of the filling space 60C gradually converge, preferably by the fact that the outer surface 46 of the bottom wall 41 defines an angle different from 0° or 180°, preferably substantially to the forward and backward directions FBD preferably an angle between about 1° and about 10°, more preferably between about 1° and about 5° (i.e. the normal vector of the outer surface 46 of the bottom wall 41 defines an angle different from 90° with respect to the forward and backward directions FBD, preferably an angle between about 80° and about 89°, more preferably between about 85° and about 89° with respect to the forward and backward directions FBD). Accordingly, the cross-sectional area of the filling space 60C is gradually reduced along a flowing path X (to be described later) of the molten resin into the filling space 60C.

Next, functions of this embodiment are described.

First, the main body 30, the holder 31 and the like are assembled to form the circuit board connector 20, which is placed as an insert at least partly in the lower die 50 and the sliding die 52 substantially closed to each other. At this time, as shown in FIG. 4, the opening of the terminal drawn-out part 43 of the circuit board connector 20 is closed by the lower die 50 and the inner surface 47 of the rear end of the bottom wall 41 of the housing 25 and the inclined rear end surface 45 are placed substantially in close contact with the recessed surface 55 and the standing surface 56 formed in the highest or distal surface 54 of the lower die 50. Further, the filling space 60A for forming one part of the tubular portion 13 of the casing 11 is formed between the lower die 50 and the sliding die 52.

Next, the upper die 52 is closed to form or define the filling space 60B for forming the remaining part of the tubular portion 13 of the casing 11 between the lower surface 62 and the sliding die 52. Further, the filling space 60C for forming the bottom plate portion 15 of the casing 11 is formed between the upper die 51 and the lower die 50 as well as the bottom wall 41 of the connector 20 as an insert.

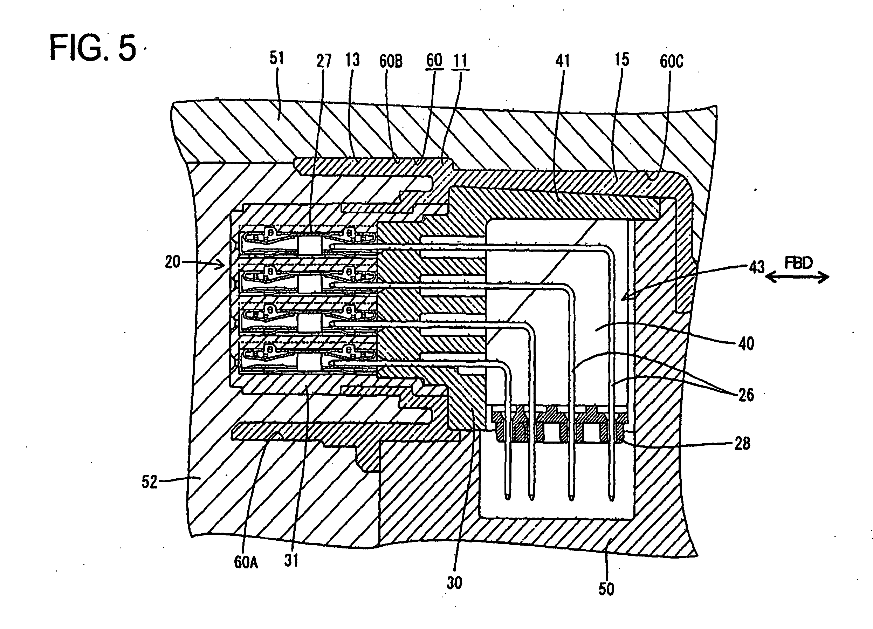

In this state, molten resin at least partly is flown and filled into the filling spaces 60 formed between the respective molds 50, 51, 52 along the flowing path X (as shown by arrows X in FIG. 4), and solidifies to form the casing 11 as a secondary molded product as shown in FIG. 5. In FIG. 5, out of the casing 11, the bottom plate 15 and the tubular portion 13 surrounding the connector 20 are shown.

Here, the molten resin flows into the filling space 60C formed between the lower surface 62 of the upper die 51 and the outer surface 46 of the bottom wall 41 of the connector 20 from a side where the cutoff portion 58 is located. Since the filling space 60C has a gradually reduced cross-section, in particular since the outer surface 46 of the bottom wall 41 of the connector 20 facing the filling space 60C is an upward inclined or converging surface along the flowing direction or flowing path X of the molten resin (or a space having a gradually reducing cross-sectional area along the flowing path X), the flown-in molten resin presses the outer surface 46 (or generates a pressure thereon), and the inner surface 47 of the bottom wall 41 of the connector 20 is pressed or urged against the recessed surface 55 of the lower die 50 and strongly held in close contact by a component "f" of this pressing force. Thus, the intrusion of the molten resin into the cutoff portion 58 is prevented, thereby preventing the leakage of the molten resin into the terminal drawn-out part 43.

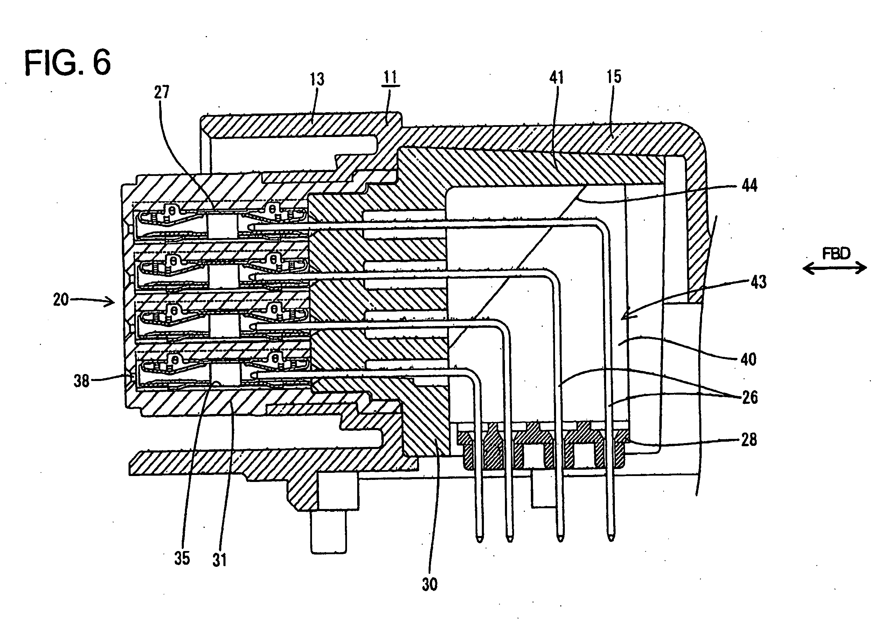

After forming the casing 11 by secondary molding, the molds are or can be opened to take the casing 11 out as shown in FIG. 6. Thereafter, as shown in FIG. 2, the board terminals 26 of the connector 20 are connected by soldering to the circuit board K mounted to cover the opening of the casing 11. Further, a seal ring 17 is fitted on the outer surface 46 of the connector 20 and retained by a ring pressing member 18 to complete the ECU 10.

As described above, according to this embodiment, the molten resin filling space 60C for forming the bottom plate portion 15 of the casing 11 preferably is defined between the lower surface 62 of the upper die 51 and the outer surface 46 of the bottom wall 41 of the connector 20 as an insert. In the case where the cutoff portion 58 is formed at a part where the rear edge of the bottom wall 41 is received by the lower die 50, the outer surface 46 of the bottom wall 41 facing the filling space 60C is formed into such an inclined or converging surface as to gradually narrow the width of the filling space 60C along the flowing direction or flowing path X of the molten resin.

Thus, upon flowing into the filling space 60C, the molten resin presses the inclined outer surface 46 of the bottom wall 41, and the inner surface 47 of the bottom wall 41 is pressed against the recessed surface 55 of the lower die 50 and strongly held in close contact by the component "f" of this pressing force. Thus, the intrusion of the molten resin into the cutoff portion 58 can be prevented, thereby preventing the leakage of the molten resin into the terminal drawn-out part 43.

Accordingly, to prevent the leakage of resin from a cutoff portion, at least one connector 20 as an insert is placed in a lower die 50 (as a first die) and, at this time, the rear end of a bottom or base wall 41 is held substantially in close contact with a corner portion of a recessed surface 55 of the lower die 50 (first die). This portion serves as a cutoff portion 58. When dies are closed, a filling space 60C for forming a casing 11 is defined between a lower or inner surface 62 of an upper die 51 (as a preferred second die) and an outer surface 46 of the bottom or base wall 41. The outer surface 46 of the bottom wall 41 preferably is an inclined surface with a moderate upward inclination. When flowing into the filling space 60C along flowing paths X (as shown by arrows X in FIG. 4), molten resin presses the inclined outer surface 46 of the bottom wall 41 and an inner surface 47 of the bottom wall 41 is pressed against the recessed surface 55 of the lower die 50 and strongly held in close contact by a component "f" of this pressing force. The intrusion of the molten resin into the cutoff portion 58 is prevented, thereby preventing the leakage of the molten resin into a terminal drawn-out portion 43.

### <Other Embodiments>

The present invention is not limited to the above described and illustrated embodiment. For example, the following embodiments are also embraced by the technical scope of the present invention as defined by the claims. Beside the following embodiments, various changes can be made without departing from the scope and spirit of the present invention as defined by the claims.
(1) The circuit board connector as an insert may not include intermediate terminals or the board terminals may be of the straight type.
(2) Although the present invention is applied to the embedded part of the one circuit board connector in the foregoing embodiment, it is similarly applied to an embedded part of the other circuit board connector.
(3) The application of the present invention is not limited to the ECU illustrated in the foregoing embodiment, and the present invention is widely applicable to resin-molded products in general formed by insert molding using primary molded products as inserts.
(4) It should be understood that even though in the above preferred embodiment the bottom surface (outer surface 46 of the bottom wall 41) is a substantially flat or straight and inclined surface, a narrowing in the cross-sectional area of the filling space 60C along the flowing path X may be achieved in any form e.g. by gradually bent surfaces or stepwise converging on the bottom surface (outer surface 46 of the bottom wall 41) and/or on the ceiling surface (lower surface 62 of the upper die 51).

### LIST OF REFERENCE NUMERALS

- 10 ...: ECU (resin-molded product)
- 11 ...: casing (secondary molded product)
- 20 ...: circuit board connector (primary molded product)
- 25 ...: housing
- 26,27...: terminal fitting
- 30 ...: main body
- 31 ...: holder
- 41 ...: bottom or base wall
- 43 ...: terminal drawn-out part
- 45 ...: rear end surface (one end surface) (of the bottom wall 41)
- 46 ...: outer surface (opposite side surface) (of the bottom wall 41)
- 47 ...: inner surface (one side surface) (of the bottom wall 41)
- 50 ...: lower die (one or first molding die)
- 51 ...: upper die (other or second molding die)
- 54 ...: highest surface (facing surface) (of the lower die 50)
- 55 ...: recessed surface
- 56 ...: standing surface
- 58 ...: cutoff portion
- 60C ...: filling space
- 62 ...: lower surface (facing surface) (of the upper die 51)

## Claims

1. A molding construction for a resin-molded product (10), comprising at
least one pair of molding dies (50, 51) openable and closable relative to each other,
wherein
at least one recessed surface (55) is formed in a facing surface (54) of a first molding die (50) to have a stepped configuration, wherein at least one insert (20) is to be placed in the first molding die (50) such that the insert (20) is held substantially in close contact with a corner portion of the recessed surface (55),
a facing surface (62) of the second molding die (51) substantially faces a side surface of the insert (20) while being spaced apart therefrom, thereby defining a filling space (60C) upon closing the molding dies (50, 51), and molten resin flows along a flowing path (X) into the filling space (60C) from a side where the corner portion of the recessed surface is located and solidifies to form a molded product (11),
**characterized in that**
a cross-sectional area of the filling space (60C) is gradually reduced along the flowing path (X) of the molten resin into the filling space (60C).

2. A molding construction according to claim 1, wherein a resin-made primary molded product (20) as the insert (20) is to be placed in the first molding die (50) and a secondary molded product (11) is to be molded by flowing resin into the filling space (60C).

3. A molding construction according to one or more of the preceding claims, wherein one side surface (47) and one rear end surface (45) of the insert (20) are to be held substantially in close contact with the corner portion of the recessed surface (55),

4. A molding construction according to claim 3, wherein the side surface of insert (20), preferably of the primary molded product (20), substantially facing the filling space (60C) is to be formed into such an inclined or converging surface as to gradually narrow the width of the filling space (60C) along a flowing path (X) of the molten resin.

5. A molding construction according to one or more of the preceding
claims and claim 2, wherein the primary molded product is a connector (20) having one or more terminal fittings (26; 27) mounted therein, and the secondary molded product is a casing (11) in which the connector (20) is at least partly embedded.

6. A molding method for molding a resin-molded product (10), comprising the following steps:
providing at least one pair of molding dies (50, 51) openable and closable relative to each other,
providing at least one recessed surface (55) in a facing surface (54) of a first molding die (50),
placing at least one insert (20) in the first molding die (50) such that the insert (20) is held substantially in close contact with a corner portion of the recessed surface (55),
defining a filling space (60C) upon closing the molding dies (50, 51) by means of a facing surface (62) of the second molding die (51) arranged to substantially face a side surface of the insert (20) while being spaced apart therefrom,
flowing molten resin along a flowing path (X) into the filling space (60C) from a side where the corner portion of the recessed surface is located, thereby generating a pressing force component (f) by means of the flown-in molten resin which presses the insert (20) against the recessed surface (55) of the second molding die (51), and solidifying the resin to form a molded product (11),
**characterized in that** the pressing force component (f) is generated by means of a cross-sectional area of the filling space (60C) being gradually reduced along the flowing path (X) of the molten resin into the filling space (60C).

7. A molding method according to claim 6, wherein a resin-made primary molded product (20) as the insert (20) is placed in the first molding die (50) and a secondary molded product (11) is molded by flowing resin into the filling space (60C).

8. A molding method according to claim 6 or 7, wherein one side surface (47) and one rear end surface (45) of the insert (20) are held substantially in close contact with the corner portion of the recessed surface (55),

9. A molding method according to claim 8, wherein the side surface of insert (20), preferably of the primary molded product (20), substantially facing the filling space (60C) is formed into such an inclined or converging surface as to gradually narrow the width of the filling space (60C) along a flowing path (X) of the molten resin.

## Patentansprüche

1. Formkonstruktion für ein harzgeformtes Produkt (10), umfassend zumindest ein Paar Formwerkzeuge (50, 51), die relativ zueinander geöffnet und geschlossen werden können, wobei
zumindest eine vertiefte bzw. ausgesparte Fläche bzw. Oberfläche (55) so in einer zugewandten Fläche bzw. Oberfläche (54) eines ersten Formwerkzeugs (50) gebildet ist, dass sie eine gestufte Konfiguration aufweist, wobei zumindest ein Einsatz (20) derart in dem ersten Formwerkzeug (50) zu platzieren ist, dass der Einsatz (20) im Wesentlichen in engem Kontakt mit einem Eckabschnitt der ausgesparten Fläche bzw. Oberfläche (55) gehalten wird,
eine zugewandte Fläche bzw. Oberfläche (62) des zweiten Formwerkzeugs (51) im Wesentlichen einer Seitenfläche bzw. -oberfläche des Einsatzes (20) zugewandt ist, während sie davon beabstandet ist, wodurch ein Füllraum (60C) beim Schließen der Formwerkzeuge (50, 51) definiert ist, und geschmolzenes Harz entlang eines Flusswegs (X) von einer Seite in den Füllraum (60C) fließt, wo sich der Eckabschnitt der ausgesparten Fläche bzw. Oberfläche befindet, und sich verfestigt, um ein geformtes Produkt (11) zu bilden,
**dadurch gekennzeichnet, dass**
ein Querschnittsbereich des Füllraums (60C) entlang des Flusswegs (X) des geschmolzenen Harzes in den Füllraum (60C) graduell verringert ist.

2. Formkonstruktion nach Anspruch 1, wobei ein primäres geformtes Produkt (20) aus Harz als Einsatz (20) in dem ersten Formwerkzeug (50) zu platzieren ist und ein sekundäres geformtes Produkt (11) durch Einfließenlassen von Harz in den Füllraum (60C) zu formen ist.

3. Formkonstruktion nach einem oder mehreren der vorhergehenden Ansprüche, wobei eine Seitenfläche bzw. -oberfläche (47) und eine hintere Endfläche bzw. -oberfläche (45) des Einsatzes (20) im Wesentlichen in engem Kontakt mit dem Eckabschnitt der ausgesparten Fläche bzw. Oberfläche (55) zu halten sind.

4. Formkonstruktion nach Anspruch 3, wobei die Seitenfläche bzw. -oberfläche des Einsatzes (20), vorzugsweise des primären geformten Produkts (20), die im Wesentlichen dem Füllraum (60C) zugewandt ist, als eine solche geneigte oder konvergierende Fläche bzw. Oberfläche auszubilden ist, dass die Breite des Füllraums (60C) entlang eines Flusswegs (X) des geschmolzenen Harzes graduell verschmälert wird.

5. Formkonstruktion nach einem oder mehreren der vorhergehenden Ansprüche und Anspruch 2, wobei das primäre geformte Produkt ein Verbinder (20) ist, in dem ein oder mehrere Anschlusspassstücke bzw. -kontakte (26; 27) montiert sind, und das sekundäre geformte Produkt ein Gehäuse (11) ist, in dem der Verbinder (20) zumindest teilweise eingebettet ist.

6. Formverfahren zum Formen eines harzgeformten Produkts (10), umfassend die folgenden Schritte:
Bereitstellen zumindest eines Paars Formwerkzeuge (50, 51), die relativ zueinander geöffnet und geschlossen werden können,
Bereitstellen zumindest einer vertieften bzw. ausgesparten Fläche bzw. Oberfläche (55) in einer zugewandten Fläche bzw. Oberfläche (54) eines ersten Formwerkzeugs (50),
Platzieren zumindest eines Einsatzes (20) in dem ersten Formwerkzeug (50) derart, dass der Einsatz (20) im Wesentlichen in engem Kontakt mit einem Eckabschnitt der ausgesparten Fläche bzw. Oberfläche (55) gehalten wird, Definieren eines Füllraums (60C) beim Schließen der Formwerkzeuge (50, 51) mittels einer zugewandten Fläche bzw. Oberfläche (62) des zweiten Formwerkzeugs (51), die so angeordnet ist, dass sie einer Seitenfläche bzw. -oberfläche des Einsatzes (20) im Wesentlichen zugewandt ist, während sie davon beabstandet ist,
Einfließenlassen von geschmolzenem Harz entlang eines Flusswegs (X) in den Füllraum (60C) von einer Seite, wo sich der Eckabschnitt der ausgesparten Fläche bzw. Oberfläche befindet, wodurch eine Presskraftkomponente (f) mittels des eingeflossenen geschmolzenen Harzes erzeugt wird, die den Einsatz (20) gegen die ausgesparte Fläche bzw. Oberfläche (55) des zweiten Formwerkzeugs (51) presst, und
Verfestigen des Harzes, um ein geformtes Produkt (11) zu bilden,
**dadurch gekennzeichnet, dass**
die Presskraftkomponente (f) mittels eines Querschnittsbereichs des Füllraums (60C) erzeugt wird, der entlang des Flusswegs (X) des geschmolzenen Harzes in den Füllraum (60C) graduell verringert ist.

7. Formverfahren nach Anspruch 6, wobei ein primäres geformtes Produkt (20) aus Harz als Einsatz (20) in dem ersten Formwerkzeug (50) platziert wird und ein sekundäres geformtes Produkt (11) durch Einfließenlassen von Harz in den Füllraum (60C) geformt wird.

8. Formverfahren nach Anspruch 6 oder 7, wobei eine Seitenfläche bzw. -oberfläche (47) und eine hintere Endfläche bzw. -oberfläche (45) des Einsatzes (20) im Wesentlichen in engem Kontakt mit dem Eckabschnitt der ausgesparten Fläche bzw. Oberfläche (55) gehalten werden.

9. Formverfahren nach Anspruch 8, wobei die Seitenfläche bzw. -oberfläche des Einsatzes (20), vorzugsweise des primären geformten Produkts (20), die im Wesentlichen dem Füllraum (60C) zugewandt ist, als eine solche geneigte oder konvergierende Fläche bzw. Oberfläche gebildet wird, dass die Breite des Füllraums (60C) entlang eines Flusswegs (X) des geschmolzenen Harzes graduell verschmälert wird.

## Revendications

1. Construction de moulage pour un produit en résine (10), comprenant au moins une paire de filières de moulage (50, 51) pouvant être ouvertes et fermées l'une par rapport à l'autre, dans laquelle
au moins une surface en retrait (55) est formée dans une surface de face (54) d'une première filière de moulage (50) pour avoir une configuration étagée, dans laquelle au moins un insert (20) doit être placé dans la première filière de moulage (50) de telle sorte que l'insert (20) est essentiellement maintenu en contact étroit avec une portion de coin de la surface en retrait (55),
une surface de face (62) de la seconde filière de moulage (51) fait essentiellement face à une surface latérale de l'insert (20) tout en étant espacée de celle-ci, définissant de ce fait un espace de remplissage (60C) lors de la fermeture des filières de moulage (50, 51), et de la résine fondue s'écoule le long d'un chemin d'écoulement (X) dans l'espace de remplissage (60C) depuis un côté où la portion de coin de la surface en retrait est situé et se solidifie pour former un produit moulé (11),
**caractérisée en ce que**
une zone en section transversale de l'espace de remplissage (60C) est progressivement réduite le long du chemin d'écoulement (X) de la résine fondue dans l'espace de remplissage (60C).

2. Construction de moulage selon la revendication 1, dans laquelle un produit primaire moulé en résine (20) en tant qu'insert (20) doit être placé dans la première filière de moulage (50) et un produit secondaire moulé (11) doit être moulé en faisant s'écouler de la résine dans l'espace de remplissage (60C).

3. Construction de moulage selon l'une ou plusieurs des revendications précédentes, dans laquelle une surface latérale (47) et une surface d'extrémité arrière (45) de l'insert (20) doivent être essentiellement maintenues en contact étroit avec la portion de coin de la surface en retrait (55).

4. Construction de moulage selon la revendication 3, dans laquelle la surface latérale de l'insert (20), de préférence du produit primaire moulé (20), faisant essentiellement face à l'espace de remplissage (60C) doit être formée dans une surface inclinée ou convergente telle qu'elle rétrécit progressivement la largeur de l'espace de remplissage (60C) le long d'un chemin d'écoulement (X) de la résine fondue.

5. Construction de moulage selon l'une ou plusieurs des revendications précédentes et la revendication 2, dans laquelle le produit primaire moulé est un connecteur (20) ayant un ou plusieurs raccords terminaux (26 ; 27) montés en son sein, et le produit secondaire moulé est un logement (11) dans lequel le connecteur (20) est au moins partiellement encastré.

6. Procédé de moulage pour mouler un produit en résine (10), comprenant les étapes suivantes :
fournir au moins une paire de filières de moulage (50, 51) pouvant être ouvertes et fermées l'une par rapport à l'autre,
fournir au moins une surface en retrait (55) dans une surface de face (54) d'une première filière de moulage (50),
placer au moins un insert (20) dans la première filière de moulage (50) de telle sorte que l'insert (20) est essentiellement maintenu en contact étroit avec une portion de coin de la surface en retrait (55),
définir un espace de remplissage (60C) lors de la fermeture des filières de moulage (50, 51) au moyen d'une surface de face (62) de la seconde filière de moulage (51) agencée pour faire essentiellement face à une surface latérale de l'insert (20) tout en étant espacée de celle-ci,
faire s'écouler de la résine fondue le long d'un chemin d'écoulement (X) dans l'espace de remplissage (60C) depuis un côté où la portion de coin de la surface en retrait est situé, générant de ce fait une composante de force de pression (f) au moyen de la résine fondue écoulée qui presse l'insert (20) contre la surface en retrait (55) de la seconde filière de moulage (51), et
faire se solidifier la résine pour former un produit moulé (11),
**caractérisé en ce que**
la composante de force de pression (f) est générée au moyen d'une zone en section transversale de l'espace de remplissage (60C) qui est progressivement réduite le long du chemin d'écoulement (X) de la résine fondue dans l'espace de remplissage (60C).

7. Procédé de moulage selon la revendication 6, dans lequel un produit primaire moulé en résine (20) en tant qu'insert (20) est placé dans la première filière de moulage (50) et un produit secondaire moulé (11) est moulé en faisant s'écouler de la résine dans l'espace de remplissage (60C).

8. Procédé de moulage selon la revendication 6 ou 7, dans lequel une surface latérale (47) et une surface d'extrémité arrière (45) de l'insert (20) sont essentiellement maintenues en contact étroit avec la portion de coin de la surface en retrait (55).

9. Procédé de moulage selon la revendication 8, dans lequel la surface latérale de l'insert (20), de préférence du produit primaire moulé (20), faisant essentiellement face à l'espace de remplissage (60C) est formée dans une surface inclinée ou convergente telle qu'elle rétrécit progressivement la largeur de l'espace de remplissage (60C) le long d'un chemin d'écoulement (X) de la résine fondue.
